# EUROPEAN PATENT APPLICATION

(11) **EP 4 696 997 A1**
(43) Date of publication of application: **18.02.2026**
(21) Application number: 24382904.1
(22) Date of filing: 12.08.2024
(51) Int. Cl.: G01K 1/022, G01K 1/02, G01K 1/143, H01M 10/42, H01M 10/48

(54) **LITHIUM-ION BATTERY MONITORING SYSTEM AND METHOD**

(71) Applicant: Imhoit, S.L., 08040 Barcelona (ES)
(72) Inventor: Botto, Julio Alfredo, Barcelona (ES); Favero, Silvio, Buenos Aires (AR); Lavergne, Ricardo, Buenos Aires (AR)
(74) Representative: Pons IP

(57) **Abstract**

The present invention relates to a lithium-ion battery monitoring system and a monitoring method that uses said system to measure and analyse multiple battery variables individually in real time. The system of the invention comprises an electronic control unit (1) comprising a processing unit, at least one flexible PCB (2), which is connected to the electronic control unit (1), is configured to be placed on the battery pack (3), a plurality of temperature sensors (4), placed on the flexible PCB (2) and connected to said flexible PCB (2), and wherein each sensor (4) is configured to detect the temperature of an individual battery. The electronic control unit (1) is configured to receive and monitor the temperature of the individual batteries of the battery pack (3).

## Description

### OBJECT OF THE INVENTION

The present invention relates to a lithium-ion battery monitoring system and a monitoring method that uses said system to measure and analyse multiple battery variables individually in real time. The system ensures accurate monitoring, performance optimization and allows for the implementation of corrective actions before adverse events occur.

### BACKGROUND OF THE INVENTION

Lithium-ion batteries are widely utilised in various applications ranging from consumer electronics to electric vehicles due to their high energy density, long cycle life, and low self-discharge rate. These rechargeable batteries function by the movement of lithium ions between the anode and cathode during charging and discharging cycles. Despite their numerous advantages, lithium-ion batteries are susceptible to issues such as overcharging, overheating, and capacity degradation, which necessitate precise monitoring to ensure safety, reliability, and optimal performance.

Current monitoring systems for lithium-ion batteries predominantly focus on measuring a limited set of variables such as voltage, current, and temperature. Conventional systems focus on surface temperature measurement on a minimal fraction of the battery pack, offering monitoring of just one or two contiguous batteries. These systems, while effective in basic battery management, often lack the capability to individually analyse each battery and multiple critical parameters. Such traditional methods bypass up to 95% of the batteries in a standard package, such as those used in Personal Mobility Vehicles (PMVs), dramatically raising the risk of critical adverse events, including thermal runaway which is a dangerous phenomenon in which a battery cell overheats and causes a chain reaction, increasing the risk of fire or explosion.

Advanced Battery Management Systems (BMS) have been developed to address some of these limitations, incorporating sophisticated algorithms and sensors to enhance monitoring accuracy. However, these solutions frequently struggle with scalability and real-time analysis, particularly in large-scale battery applications such as energy storage systems and electric vehicle fleets.

The state-of-the-art systems in lithium-ion battery monitoring typically involve complex hardware setups and intricate software solutions to manage the data collected from various sensors. While these systems have improved the safety and efficiency of lithium-ion batteries, they often fall short in providing comprehensive, individual analysis of multiple battery variables. Therefore, there is a need in the prior art for a novel monitoring system and method that monitors lithium-ion batteries to overcome these shortcomings.

### DESCRIPTION OF THE INVENTION

In accordance with the first aspect of the present invention there is provided a monitoring system specifically designed to accurately measure and analyse in real time multiple critical variables that affect the health and performance of lithium-ion batteries. This comprehensive system measures the surface temperature of each battery individually within a battery pack, along with other equally relevant indicators as it detects and records, like charge cycles, rest cycles, discharge cycles, vibrations, shocks, as well as the room temperature. Each battery is uniquely identified through a specific numerical identifier, allowing detailed and personalised tracking.

The monitoring system of the invention comprises an electronic control unit comprising a processing unit and a memory, at least one flexible PCB (printed circuit board) which is connected to the electronic control unit, is configured to be placed on the battery pack, a plurality of temperature sensors, placed on the flexible PCB and connected to said flexible PCB, and wherein each sensor is configured to detect the temperature of an individual battery, wherein the electronic control unit is configured to receive and monitor the temperature of the individual batteries of the battery pack, a plurality of cables for serial connection through communications protocol and, preferably, a power cable for providing energy to the system.

The electronic control unit is connected to an external monitoring system and configured to transmit the temperature of the individual batteries of the battery pack to be monitored. Said connection is realised by using wires for serial connection or wirelessly, by means of a communications protocol.

A flexible PCB, also known as a flex circuit, is a type of printed circuit board that could be made from flexible polymer substrates like polyimide or polyester. The flexibility of the PCB strip allows an easy integration of the system of the invention into any battery configuration within a specific pack. This adaptability is essential to ensure effective monitoring of thermal and mechanical conditions, regardless of the spatial arrangement of the batteries in the pack.

The core of the system resides in the flexible PCB, in which high precision temperature sensors are integrated. These sensors could be connected in series through a data bus that communicates with a central processing unit (CPU). The CPU is preferably equipped with a sophisticated layer of data analysis algorithms, and it is located in the electronic control unit.

These algorithms can predict situations that could compromise the health of the batteries based on the measurements collected by the sensors. The algorithms could also be used for generating status alarms, interrupting charging or discharging electricity as a preventative measure, facilitating critical decision making in real time.

The electronic control unit is based on an advanced hardware design to optimise the performance and safety of lithium-ion battery packs. It comprises a processing unit or a processor and a memory. The processor is based on a high-performance processing module, capable of running advanced predictive algorithms and managing secure communications. The processor is preferably a dual-core processor, optimised for computing-intensive tasks and real-time data management. The memory of the system is a high-capacity integrated memory, both for firmware storage and for collected data and predictive analysis algorithms.

Preferably, the electronic control unit provides a versatile connectivity with multiple digital and communication interfaces, including Wi-Fi and Bluetooth, facilitating secure data transmission and remote control and it permits an implementation of security protocols, including robust encryption to protect the integrity and privacy of transmitted data.

In accordance with another aspect of the invention there is provided a battery pack monitoring method which uses the monitoring system described and comprises the steps of detecting and recording a surface temperature of each battery of the battery pack individually using the sensors, sending the surface temperature of each battery of the battery pack to the electronic control unit and processing and monitoring the surface temperature to anticipate critical events, and to generate status alarms and/or to perform automatic cuts in battery charging and discharging functions.

The method further comprises the steps of recording data such as charge cycles, sleep cycles, discharge cycles, vibrations, shocks and/or ambient temperature by using auxiliary sensors connected to the electronic control unit and sending the recorded data to the electronic control unit to be processed and monitored.

A critical event can be a thermal overflow and the method can generate a status alarm to activate the buzzer.

This system and the method of the invention is designed to efficiently execute critical operations, such as the storage and processing of specific data, including predictive algorithms that allow the anticipation of critical events, such as thermal runaway. In addition, it is equipped to activate alarms and perform automatic cuts in the charging and discharging of the batteries, as preventive measures against potentially dangerous conditions. For example, the system comprises an audio signalling device, the buzzer. The buzzer activates as a sound actuator upon detection of a possible thermal overflow event.

The system of the invention could also comprise an sensor configured to detect an attempt to open a receptacle where the battery pack is housed and an anti-tampering system connected to the electronic control unit, which serves as a locking system against opening the receptacle, as a protection mechanism against unauthorised intervention. It works when someone tries to open the receptacle where the sensors and the battery pack are located. Activating this actuator generates a value in the memory that does not allow the battery system to operate and therefore cancels the battery charging and discharging functions.

The electronic control unit could comprise a communications interface, to be used exclusively for a technical service, which refers to cables for serial connection through a communications protocol. The system of the invention preferably uses Modbus-RTU protocol that transmits messages using binary character encoding, making them more efficient in terms of speed and use of processing resources

Regarding the anticipation of events, the system of the invention could use a series of algorithms; one of them is implemented with the objective of cleaning the data from possible interferences. The system uses the Kalman Filter for said cleaning purpose. This algorithm updates its estimates at each time step based solely on new input information (data provided by the sensors) and previous estimates. So not all previous measurements are stored, and this reduces the probability that incorrect or "noisy" measurements negatively affect the estimate of the system state. Once this adjustment is made with the data that comes from all the available sensors, a model called "Autoregressive Model" (AM) could be fed, used for forecasting, where a future value of a variable can be expressed as a linear combination of its past values. To achieve this, coefficients are used that are calculated from adjustment methods such as "least squares" and which are used to find the curve that best fits a set of data.

Least squares method can be used as a basis of the inference of future values or the so-called "predictability".

In this way, from a given moment and following the trend expressed in the least squares method formula, to obtain an approximate value, for example, the value of the temperature that the sensors could measure for the next 10 minutes. And if necessary, the system acts preventively by sounding the buzzer, or stopping the charging process, activating alerts on a user's cell phone, etc., or a combination of some of the available actions.

The monitoring system is capable of recording and transmitting real-time data on a wide range of critical variables, therefore it enables comprehensive and detailed monitoring of the operating conditions of each individual battery, making it easier to predict and prevent problems. Detailed monitoring allows dynamically adjusting charge and discharge parameters to maximise energy efficiency and extend battery life by avoiding unnecessary stress on the batteries.

The monitoring system and method of the invention ensures complete control over 100% of a battery pack and can prevent thermal runaway by accurately and early identification of abnormal conditions and offers safety and an extended battery life thanks to its proactive approach. Another advantage of the system of the invention is reduction in maintenance cost by preventing catastrophic failures and improving battery life cycle management.

Also, by extending the life of batteries and reducing the need for frequent replacements, the system and the method of the invention offers a reduction of electronic waste and a more efficient use of resources, aligning with the environmental sustainability goals.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:
Figure 1 - Shows a view of the monitoring system for lithium-ion batteries according to the invention.
Figure 2 - Shows a side view of the monitoring system.

### PREFERRED EMBODIMENT OF THE INVENTION

The present invention, according to a preferred embodiment of the invention, describes a lithium-ion battery monitoring system for monitoring the temperature of individual batteries of a battery pack (3). The system comprises an electronic control unit (1) comprising a processing unit, at least one flexible PCB (2), which is connected to the electronic control unit (1), is configured to be placed on the battery pack (3), a plurality of temperature sensors (4), placed on the flexible PCB (2) and connected to said flexible PCB (2), and wherein each sensor (4) is configured to detect the temperature of an individual battery, wherein the electronic control unit (1) is configured to receive and monitor the temperature of the individual batteries of the battery pack (3).

The flexible PCB (2) is made of flexible polymers.

The electronic control unit (1) is connected to an external monitoring system by using wires (5) for serial connection or wirelessly, by means of a communications protocol and configured to transmit the temperature of the individual batteries of the battery pack (3) to be monitored. Said communications protocol is encrypted and the communications protocol is a Modbus-RTU protocol that transmits messages using binary encoding.

The monitoring system of the invention further comprises auxiliary sensors placed on the flexible PCB (2) configured to measure charge cycles, rest cycles, discharge cycles, vibrations, shocks and/or room temperature.

The battery pack (3) is placed on a receptacle and the monitoring system further comprises an anti-tampering system (6), connected to the electronic control unit (1) and configured to deactivate battery charging and discharging functions when an attempt to open the receptacle is detected.

The monitoring system further comprises a buzzer connected to the electronic control unit (1).

According to another aspect of the invention, a battery pack monitoring method which uses the system of the invention comprises the steps of detecting and recording a surface temperature of each battery of the battery pack (3) individually using the sensors (4), sending the surface temperature of each battery of the battery pack (3) to the electronic control unit (1) and processing and monitoring the surface temperature to anticipate critical events, and to generate status alarms and/or to perform automatic cuts in battery charging and discharging functions.

The battery pack monitoring method further comprises the steps of recording data such as charge cycles, sleep cycles, discharge cycles, vibrations, shocks and/or ambient temperature by using auxiliary sensors and sending the recorded data to the electronic control unit (1) to be processed and monitored.

The method of the invention further comprises a step of assigning a numerical identifier to each battery for personalised tracking.

The step of processing and monitoring data uses an Autoregressive Model (AM) for forecasting a future value of the temperature and Kalman Filter for cleaning noise from the recorded data. In the said step the critical event is a thermal overflow and the generation of a status alarm is to activate the buzzer (7).

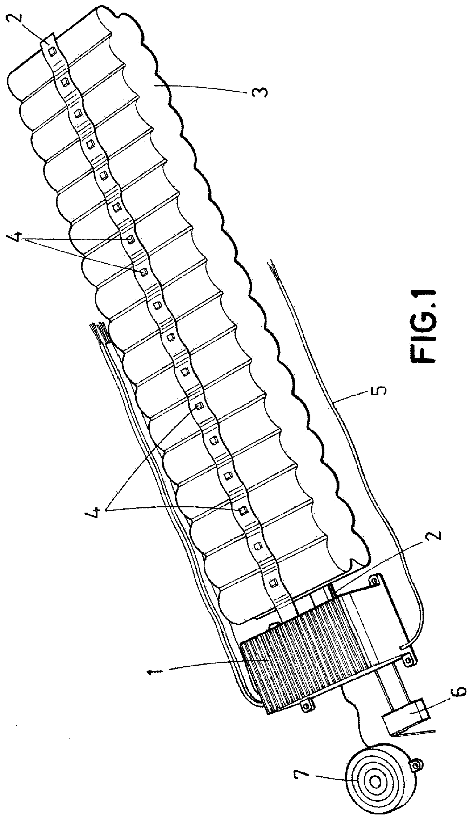

The figure 1 shows the lithium-ion battery monitoring system wherein the electronic control unit (1) is coupled to the battery pack and two flexible PCBs (2), one extends along the bottom and the other extends on the superior surface of the battery pack (3). The buzzer (7), the anti-tampering system (6), the power cable (8), the flexible PCBs (2) and the cables (5) for serial connection are all connected to the electronic control unit (1).

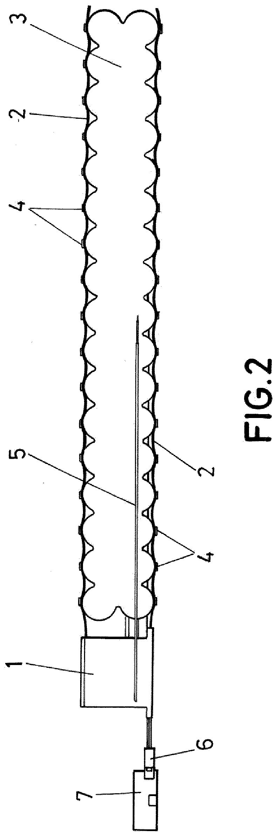

The figure 2 shows a side view of the monitoring system.

The system of the invention offers a wide range of applications. It can be integrated to the electric vehicles during or after manufacturing of these vehicles. The system can be used for energy storage systems that rely on lithium-ion batteries, such as those used in solar and wind installations. It can also be used in backup systems and uninterruptible power supplies (UPS) and other backup systems that use lithium-ion batteries to maintain critical operations. In applications where reliability and safety are critical, such as in satellites, unmanned aerial vehicles (UAVs) and defence systems, the system of the invention can also be used.

## Claims

1. Lithium-ion battery monitoring system for monitoring the temperature of individual batteries of a battery pack (3) comprising:
- an electronic control unit (1) comprising a processing unit,
- at least one flexible PCB (2), which is connected to the electronic control unit (1), is configured to be placed on the battery pack (3),
- a plurality of temperature sensors (4), placed on the flexible PCB (2) and connected to said flexible PCB (2), and wherein each sensor (4) is configured to detect the temperature of an individual battery,
wherein the electronic control unit (1) is configured to receive and monitor the temperature of the individual batteries of the battery pack (3).

2. The monitoring system according to claim 1, wherein the electronic control unit (1) is connected to an external monitoring system and configured to transmit the temperature of the individual batteries of the battery pack (3) to be monitored.

3. The monitoring system according to claim 2, wherein the electronic control unit (1) is connected to the external monitoring system by using wires (5) for serial connection or wirelessly, by means of a communications protocol.

4. The monitoring system according to claim 3, wherein the communications protocol is encrypted.

5. The monitoring system according to claim 3, wherein the communications protocol is a Modbus-RTU protocol that transmits messages using binary encoding.

6. The monitoring system according to claim 3, wherein the flexible PCB (2) is made of flexible polymers.

7. The monitoring system according to claim 1, further comprising auxiliary sensors placed on the flexible PCB (2) configured to measure charge cycles, rest cycles, discharge cycles, vibrations, shocks and/or room temperature.

8. The monitoring system according to claim 1, wherein the battery pack (3) is placed on a receptacle, and the monitoring system further comprises
- a sensor connected to the electronic control unit (1), placed on the battery pack (3) and configured to detect an attempt to open the receptacle and,
- an anti-tampering system (6), connected to the electronic control unit (1) and configured to deactivate battery charging and discharging functions when an attempt to open the receptacle is detected.

9. The monitoring system according to claim 1 and 2, further comprising a buzzer (7) connected to the electronic control unit (1).

10. A battery pack monitoring method which uses the system of claim 1 and comprises the steps of:
- detecting and recording a surface temperature of each battery of the battery pack (3) individually using the sensors (4),
- sending the surface temperature of each battery of the battery pack (3) to the electronic control unit (1); and
- processing and monitoring the surface temperature to anticipate critical events, and to generate status alarms and/or to perform automatic cuts in battery charging and discharging functions.

11. The battery pack monitoring method according to claim 10, further comprising the steps of recording data such as charge cycles, sleep cycles, discharge cycles, vibrations, shocks and/or ambient temperature by using auxiliary sensors connected to the electronic control unit (1), and sending the recorded data to the electronic control unit (1) to be processed and monitored.

12. The battery pack monitoring method according to claim 10, further comprising a step of assigning a numerical identifier to each battery for personalised tracking.

13. The battery pack monitoring method according to claim 10, wherein the step of processing and monitoring data uses an Autoregressive Model (AM) for forecasting a future value of the temperature and Kalman Filter for cleaning noise from the recorded data.

14. The battery pack monitoring method according to claim 10, wherein in the step of processing and monitoring data, the critical event is a thermal overflow.

15. The battery pack monitoring method according to claim 10, wherein in the step of processing and monitoring data, the generation of a status alarm is to activate the buzzer (7).
